# EUROPEAN PATENT APPLICATION

(11) **EP 4 160 098 A1**
(43) Date of publication of application: **05.04.2023**
(21) Application number: 22197931.3
(22) Date of filing: 27.09.2022
(51) Int. Cl.: F24F 1/0047, F24F 8/30, F24F 13/22

(54) **INDOOR UNIT**

(30) Priority: 29.09.2021 JP 2021160052
(71) Applicant: Panasonic Intellectual Property Management Co., Ltd., Osaka-shi, Osaka 540-6207 (JP)
(72) Inventor: Hiraike, Masaki, Osaka, 540-6207 (JP); Okuyama, Yoshitaka, Osaka, 540-6207 (JP)
(74) Representative: Eisenführ Speiser

(57) **Abstract**

To provide an air conditioner that achieves both highly efficient air conditioning and sterilization function. An indoor unit including an indoor unit main body 10, wherein: the indoor unit main body 10 includes a drain pan 20, having a suction port 21 in a center in a plan view, and a sterilization unit 60; and the sterilization unit 60 is arranged in a corner portion 21y of the drain pan 20.

## Description

### BACKGROUND OF THE INVENTION

### Field of the Invention

The present disclosure relates to an indoor unit.

### Description of the Related Art

Japanese Patent Laid-Open No. 2017-125652 discloses a ceiling-embedded indoor unit that includes a sterilization unit and performs a purification operation that drives the sterilization unit during internal cleaning operation to prevent mold, viruses, etc. from being generated inside.

An object of the present invention is to provide an air conditioner that achieves both highly efficient air conditioning and sterilization function.

### SUMMARY OF THE INVENTION

An indoor unit according to the present disclosure includes an indoor unit main body, wherein the indoor unit main body includes a drain pan and a sterilization unit, the drain pan having a suction port in a center in a plan view, and the sterilization unit is arranged in one of corner portions of the drain pan.

In the indoor unit according to the present disclosure, the sterilization unit can be arranged in a large space located in a suction port corner portion provided in the drain pan. Therefore, the air flow is less likely to be hindered, and both highly efficient air conditioning and sterilization functions can be achieved.

### BRIEF DESCRIPTION OF THE DRAWINGS

FIG. 1 is a bottom view of an indoor unit main body according to Embodiment 1;
FIG. 2 is a view of a II-II cross section in FIG. 1 as viewed in a direction of arrows; and
FIG. 3 is a bottom view of the indoor unit main body with a drain pan and a resin cover removed.

### DETAILED DESCRIPTION OF THE PREFERRED EMBODIMENTS

### (Knowledge on Which the Present Disclosure Is Based and Others)

When the inventors came up with the present disclosure, the technology of indoor units had sterilization function in some cases. Therefore, in the industry, there had been product designs in which an indoor unit includes a sterilization device. Under such circumstances, the inventors have found a problem in which space available for installation is so small for a sterilization device being installed in a small four-way cassette type indoor unit that the air flow is hindered, and have made the subject of the present disclosure.

Therefore, the present disclosure provides an indoor unit that achieves both highly efficient air conditioning and sterilization function in a four-way cassette indoor unit.

Hereinafter, embodiments will be described in detail with reference to the drawings. However, more detailed description than necessary may be omitted. For example, detailed description of well-known matters or redundant description of substantially the same configurations may be omitted.

Note that the accompanying drawings and the following description are provided to allow those skilled in the art to sufficiently understand the present disclosure, and are not intended to limit the subject matter described in the claims.

### (Embodiment 1)

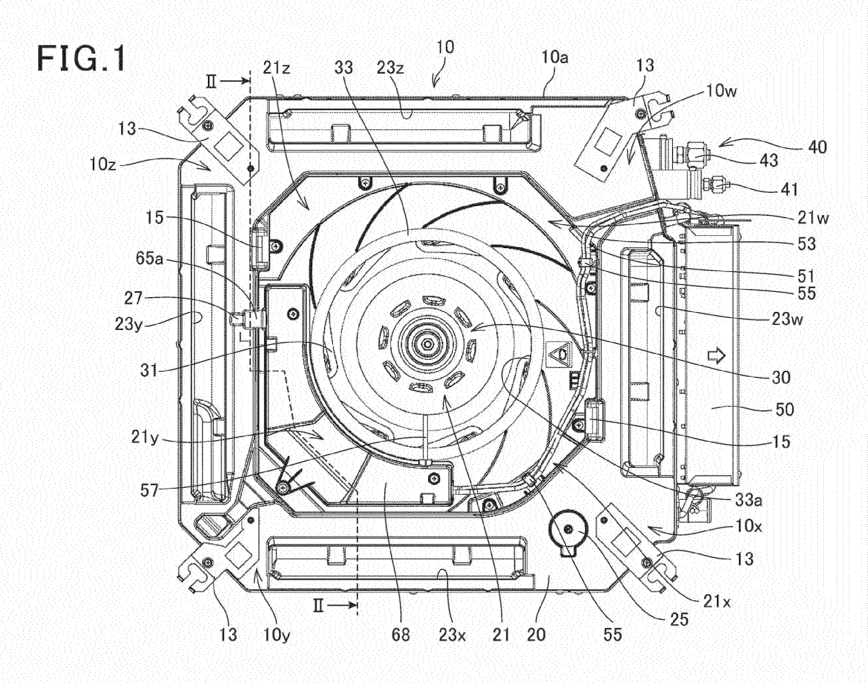

Embodiment 1 will be described below with reference to FIGS. 1 to 3.

### [1-1. Configuration]

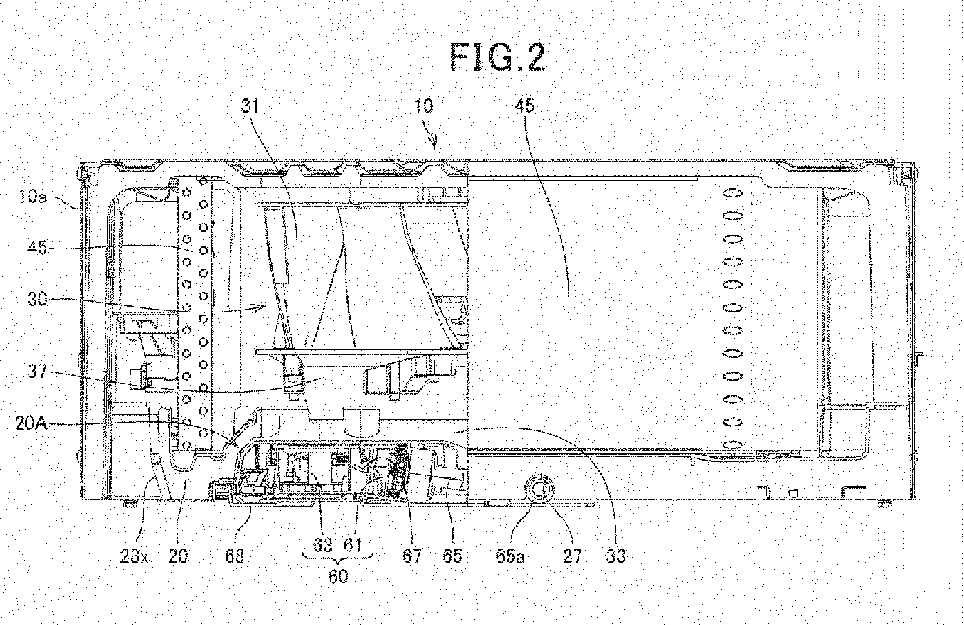

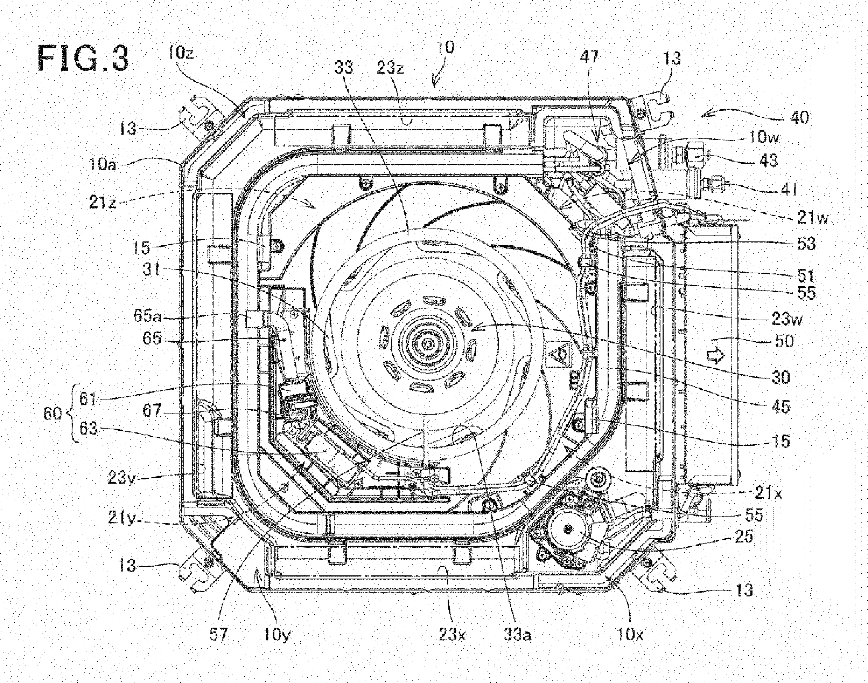

FIG. 1 is a bottom view of an indoor unit main body 10 according to Embodiment 1. FIG. 2 is a view of a II-II cross section of FIG. 1 as viewed in the direction of arrows. FIG. 3 is a bottom view of an indoor unit main body 10 with a drain pan 20 and a resin cover 68 removed.

The indoor unit main body 10 is a device that: houses devices of the indoor unit in a box-shaped housing 10a; is connected to a decorative panel (not shown) at the bottom; and is embedded in the ceiling of the space to be conditioned as an indoor unit of the air conditioner.

FIG. 1 shows a four-way cassette indoor unit.

The indoor unit main body 10 includes: the drain pan 20 provided so as to cover the lower surface of the indoor unit main body 10; a blower 30; a refrigerant piping connection portion 40; and an electrical equipment box 50. The indoor unit main body 10 is fixed to the ceiling via hanging brackets 13 at the four corners. A decorative panel (not shown) is fixed in a state of being engaged with two claw portions 15 provided diagonally on the bottom surface of the indoor unit main body 10.

The refrigerant piping connection portion 40 is provided at the main body corner portion 10w of the indoor unit main body 10.

The refrigerant piping connection portion 40 includes a liquid piping connection portion 41 and a gas piping connection portion 43, each extending to the outside of the indoor unit main body 10, and circulates refrigerant with a heat exchanger 45 shown in FIG. 2 and an external refrigerant piping (not shown).

The drain pan 20 formed in a substantially square shape shown in FIG. 1 is provided at a lower part of the heat exchanger 45 shown in FIG. 2 to receive drain water. The drain pan 20 has: a suction port 21, which is a substantially square shaped opening, formed in the center; and substantially rectangular shaped blowout ports 23w to 23z, which are substantially rectangular shaped openings, formed on the four peripheral sides. Further, the drain pan 20 has a drain pump 25 at a main body corner portion 10x. The drain pump 25 discharges drain water from a drain hose (not shown).

The blower 30 is provided in the center of the indoor unit main body 10 in a plan view, and includes a centrifugal fan 31, a bell mouth 33, and a shroud 37.

The blower 30 rotates the centrifugal fan 31 to suck in the air in the space to be conditioned via the decorative panel side suction port provided in the decorative panel (not shown) and the suction port 21. The sucked air is rectified by the bell mouth 33 and the shroud 37, heat-exchanges with the heat exchanger 45, and is then blown out through the blowout ports 23w to 23z and a discharge port provided in the decorative panel (not shown).

The electrical equipment box 50 is provided outside the housing 10a. A sensor wiring 51 and a sterilization unit wiring 53 are led into the suction port 21 from the electrical equipment box 50. The sensor wiring 51 connects the electrical equipment box 50 and a suction temperature sensor 57 provided in the center of the bell mouth 33. The sterilization unit wiring 53 connects the electrical equipment box 50 and a sterilization unit 60 to be described later. Further, the sensor wiring 51 and the sterilization unit wiring 53 are bundled by a hook 55 and arranged along the outer edge of the suction port 21.

Further, as shown in FIG. 1, the indoor unit main body 10 includes the resin cover 68 at a suction port corner portion (corner portion) 21y. The suction port corner portion 21y is located inside the suction port 21 in a plan view and diagonally opposite the main body corner portion 10w where the refrigerant piping connection portion 40 is provided. The resin cover 68 has a curved shape along the bell mouth 33 and is provided at a position that does not block the flow of air sucked from an opening 33a of the bell mouth 33 by using the blower 30.

Inside the resin cover 68, the sterilization unit 60 is housed as shown in FIG. 3. The sterilization unit 60 includes an electrostatic atomizer (sterilization device) 61 and an electrostatic atomizer board 63. The electrostatic atomizer 61 has a nozzle 65.

The electrostatic atomizer 61 is a device that generates mist containing charged particulate water for sterilization, and emits the mist from a nozzle end 65a through the nozzle 65. The board 63 is provided adjacent to the electrostatic atomizer 61 as a separate body from the electrostatic atomizer 61 and drives the electrostatic atomizer 61. Also, the board 63 is connected to the electrical equipment box 50 via the sterilization unit wiring 53. The electrostatic atomizer 61 and the board 63, which are separate bodies from each other, are electrically connected by using a connection wiring 67, and the connection wiring 67 is at a high voltage.

Here, the electrostatic atomizer 61 and the board 63 are provided in a state of bending along the suction port 21 and the bell mouth 33. The board 63 is arranged in the suction port corner portion 21y having a large space. The electrostatic atomizer 61 is provided so as to be along a blowout port 23y (see FIG. 1) adjacent to the suction port corner portion 21y and so as not to block the flow of air sucked from the opening 33a of the bell mouth 33.

Note that, in the present invention, the electrostatic atomizer 61 and the board 63 only need to be adjacent to each other, and do not necessarily have to be along the blowout port 23y.

As shown in FIG. 2, the electrostatic atomizer 61 and the electrostatic atomizer board 63 are arranged in a recess 20A provided on the lower surface of the bottom portion of the drain pan 20. A spray port 27 is formed on the side surface of the bottom portion of the drain pan 20, and a nozzle 65 of an electrostatic atomizer 61 is connected to the spray port 27. The spray port 27 communicates with the blowout port 23y, as shown in FIG. 1. Therefore, the mist containing charged particulate water generated by the electrostatic atomizer 61 flows into the room through the nozzle 65, the nozzle end 65a, the spray port 27, the blowout port 23y, and the discharge port provided in the decorative panel (not shown).

In addition, as shown in FIG. 3, the main body corner portion 10w is provided with a heat exchanger connection portion 47 for connecting the heat exchanger 45 to the liquid piping connection portion 41 and the gas piping connection portion 43 of the refrigerant piping connection portion 40. Further, the main body corner portion 10x is provided with the drain pump 25 as described above.

Therefore, as shown in FIG. 1, suction port corner portions 21w and 21x have smaller spaces than suction port corner portions 21y and 21z. Further, as shown in FIG. 1, the suction port corner portions 21x and 21z are provided with claw portions 15 that engage with the decorative panel (not shown).

Thus, in the suction port corner portion 21y, there is not arranged any of the refrigerant piping connection portion 40, the drain pump 25, and the claw portion 15. This provides the suction port corner portion 21y with the largest space. Therefore, in the suction port corner portion 21y, there is arranged a sterilization unit 60 including a large-sized board 63.

Furthermore, comparing the suction port corner portions 21x and 21z, the suction port corner portion 21z has a larger space because the drain pump 25 is not arranged. Therefore, the electrostatic atomizer 61 is provided along the blowout port 23y, which is adjacent to the suction port corner portions 21y and 21z and has the largest area in the blowout ports 23w to 23z.

In other words, the drain pump 25 installed at the main body corner portion 10x makes the space on the side of a blowout port 23x in the corner portion 21y smaller than the space on the side of the blowout port 23y in the corner portion 21y. Therefore, the electrostatic atomizer 61 is provided on the side of the blowout port 23y of the suction port corner portion 21y having a large space.

Further, the electrostatic atomizer 61 is provided on the side of the blowout port 23y of the suction port corner portion 21y, so that the sterilization unit wiring 53 is easily routed to the side of the blowout port 23x of the suction port corner portion 21y. Thereby, the wiring can be put together on the side where the drain pump 25 is arranged.

### [1-2. Operation]

Operation of the indoor unit including the indoor unit main body 10 configured as above will be described below.

During air conditioning operation of the indoor unit, the refrigerant is exchanged with an external refrigerant piping (not shown) at the refrigerant piping connection portion 40 of the indoor unit main body 10. The gas refrigerant flows into the indoor unit main body 10 from the gas piping connection portion 43 when the indoor unit performs heating operation, and the liquid refrigerant flows into the indoor unit main body 10 from the liquid piping connection portion 41 when the indoor unit performs cooling operation. The refrigerant that has flowed into the indoor unit main body 10 flows into the heat exchanger 45 via the heat exchanger connection portion 47.

Further, when the indoor unit is in air conditioning operation, the blower 30 is in operation, and the centrifugal fan 31 sucks the air in the space to be conditioned into the indoor unit main body 10 through the decorative panel side suction port and the suction port 21. The sucked air is rectified by the bell mouth 33 and the shroud 37 and is pushed outward in the indoor unit main body 10 by the centrifugal fan 31. The air pushed out passes through the heat exchanger 45 that is arranged so as to surround the periphery of the blower 30.

At this time, heat exchange takes place between the air and the refrigerant in the heat exchanger 45. In the heating operation, the gas refrigerant gives heat to the air to heat it, and the gas refrigerant turns into liquid refrigerant and flows out from the liquid piping connection portion 41. In the cooling operation, the liquid refrigerant takes heat from the air to cool it, and the liquid refrigerant turns into the gas refrigerant and flows out from the gas piping connection portion 43.

The air after heat exchange with the refrigerant in the heat exchanger 45 flows into the space to be conditioned from the blowout ports 23w to 23z and the discharge port of the decorative panel (not shown), so that the space to be conditioned is air-conditioned.

At this time, the sterilization unit 60 can also be put into operation. In this case, the mist containing the charged particulate water generated by the electrostatic atomizer 61 passes through the nozzle 65, the nozzle end 65a, and the spray port 27 formed in the drain pan 20, and flows into the blowout port 23y.

Therefore, the air pushed out by the centrifugal fan 31 is mixed with the mist containing the charged particulate water when passing through the blowout port 23y, and is sent into the space to be conditioned.

As a result, the mist spreads over a large area of space to be conditioned, sterilizing the space to be conditioned.

Further, in the present embodiment, the sterilization unit 60 and the resin cover 68 are arranged in the suction port corner portion 21y of the suction port 21 that sucks in the air in the space to be conditioned, so as not to obstruct the flow of air sucked into the opening 33a of the bell mouth 33.

Therefore, the flow of air by using the blower 30 is smooth in air conditioning of the indoor unit.

### [1-3. Effects and Others]

As described above, in the present embodiment, the sterilization unit 60 is arranged in a suction port corner portion 21y having a large space. This makes it possible to prevent sterilization unit 60 from obstructing the flow of air sucked from the suction port 21. Moreover, the sterilization unit 60 is arranged in the recess 20A provided in the lower surface of the bottom portion of the drain pan 20. This makes it possible to prevent the flow of air sucked from the suction port 21 from being obstructed. Therefore, even with a small indoor unit, both sterilization by using the sterilization unit 60 and efficient air conditioning can be achieved.

The sterilization unit 60 is arranged in the recess 20A provided on the lower surface of the bottom portion of the drain pan 20. As shown in FIG. 1, if the resin cover 68 is removed in a state in which the decorative panel (not shown) is removed, the sterilization unit 60 is exposed to the indoor side, facilitating maintenance of the sterilization unit 60.

Further, in the present embodiment, the sterilization unit 60 has the electrostatic atomizer 61 and the electrostatic atomizer board 63, and is bent to be arranged along the suction port 21. This makes it possible to arrange the sterilization unit 60 so as not to obstruct the flow of air sucked from the suction port 21, even in the suction port corner portion 21y that does not have a large rectangular-shaped space. Therefore, even with a small indoor unit, both sterilization by using the sterilization unit 60 and efficient air conditioning can be achieved.

In addition, in the present embodiment, the board 63, which is likely to be larger than the electrostatic atomizer 61, is arranged in the suction port corner portion 21y having a large space. Therefore, even with a small indoor unit, both sterilization by using the sterilization unit 60 and efficient air conditioning can be achieved.

Further, in the present embodiment, the board 63, which is likely to be larger than the electrostatic atomizer 61, is arranged in the suction port corner portion 21y having the largest space among the suction port corner portions 21w to 21z. In addition, the electrostatic atomizer 61 is arranged in the direction of the suction port corner portion 21z, adjacent to the suction port corner portion 21y, where there are less obstacles such as the drain pump 25. Therefore, even with a small indoor unit, both sterilization by using the sterilization unit 60 and efficient air conditioning can be achieved.

Furthermore, the electrostatic atomizer 61 is arranged at a position adjacent to the board 63, so that a high-voltage portion connecting the electrostatic atomizer 61 and the board 63 is reduced and safety can be improved.

In the present embodiment, the sterilization unit 60 is composed of the electrostatic atomizer 61 and the board 63 which are provided separately. However, the sterilization unit 60 only needs to be provided so as not to hinder the flow of air sucked from the suction port 21. Therefore, for example, the electrostatic atomizer 61 and the board 63 constituting the sterilization unit 60 may be integrally housed into a case having a shape curved along the suction port corner portion 21y and the opening 33a of the bell mouth 33.

However, as in the present embodiment, forming the sterilization unit 60 with the electrostatic atomizer 61 and the board 63 provided separately allows a common sterilization unit 60 to be used for models of indoor units of different sizes and shapes.

In the present embodiment, the sterilization unit 60 is configured to generate mist containing charged particulate water by using the electrostatic atomizer 61 and to perform sterilization by using the mist. However, the sterilization unit 60 is not limited to one that generates mist containing charged particulate water by using the electrostatic atomizer 61 as long as sterilization can be performed.

In the present embodiment, the four-way cassette indoor unit is described, but the present invention is not limited to this and can be applied to, for example, a two-way cassette.

Note that the above-described embodiment is for illustrating the technique in the present disclosure, and various modifications, replacements, additions, omissions, etc. can be made within the scope of the claims or equivalents thereof.

### Industrial Applicability

The present disclosure is applicable to indoor units such as a four-way cassette type.

### Reference Signs List

- 10: indoor unit main body
- 10a: housing
- 10w: main body corner portion
- 10x: main body corner portion
- 10y: main body corner portion
- 10z: main body corner portion
- 13: hanging bracket
- 15: claw portion
- 20: drain pan
- 20A: recess
- 21: suction port
- 21w: suction port corner portion
- 21x: suction port corner portion
- 21y: suction port corner portion (corner portion)
- 21z: suction port corner portion
- 23w: blowout port
- 23x: blowout port
- 23y: blowout port
- 23z: blowout port
- 25: drain pump
- 27: spray port
- 30: blower
- 31: centrifugal fan
- 33: bell mouth
- 33a: opening
- 37: shroud
- 40: refrigerant piping connection portion
- 41: liquid piping connection portion
- 43: gas piping connection portion
- 45: heat exchanger
- 47: heat exchanger connection portion
- 50: electrical equipment box
- 51: sensor wiring
- 53: sterilization unit wiring
- 55: hook
- 57: suction temperature sensor
- 60: sterilization unit
- 61: electrostatic atomizer (sterilization device)
- 63: board
- 65: nozzle
- 65a: nozzle end
- 67: connection wiring
- 68: resin cover

## Claims

1. An indoor unit **characterized by** comprising an indoor unit main body (10), wherein
the indoor unit main body includes a drain pan (20) and a sterilization unit (60), the drain pan having a suction port (21) in a center in a plan view, and
the sterilization unit is arranged in one of corner portions of the drain pan.

2. The indoor unit according to claim 1, wherein
the sterilization unit is arranged in a recess (20A) provided on a lower surface of a bottom portion of the drain pan.

3. The indoor unit according to claim 1 or 2, wherein
the sterilization unit is arranged in a corner portion (21y) of the corner portions, the corner portion being located diagonally opposite to a refrigerant piping connection portion (40).

4. The indoor unit according to claim 1 or 2, wherein
the sterilization unit includes a sterilization device (61) and a board (63) for the sterilization device, the board being provided separately from the sterilization device, and
the sterilization device and the board are arranged so as to be along the suction port.

5. The indoor unit according to claim 4, wherein
the board is provided in one of the corner portions, and
the sterilization device is provided at a position, the position being adjacent to the board and being along the suction port.

6. The indoor unit according to claim 5, wherein
the board is arranged in a first corner portion (21y), located diagonally opposite to a refrigerant piping connection portion (40), of the corner portions, and
the sterilization device is:
arranged at a position adjacent to the board; and
provided at a position in a direction in which a second corner portion (21z) of the corner portions is located, the second corner portion being the furthest from a drain pump (25) in the corner portions adjacent to the first corner portion where the board is arranged.
